(19) Europäisches Patentamt
European Patent Office
Office européen des brevets

(11) Publication number: **0 287 230 A2**

(12) # EUROPEAN PATENT APPLICATION

(21) Application number: **88302644.5**

(51) Int. Cl.[4]: **B29C 67/22 , //B29L31:30**

(22) Date of filing: **25.03.88**

(30) Priority: **11.04.87 GB 8708720**

(43) Date of publication of application: **19.10.88 Bulletin 88/42**

(84) Designated Contracting States: **DE FR GB IT**

(71) Applicant: **Dow Corning Limited**
**Inveresk House 1 Aldwych**
**London WC2R 0HF(GB)**

(72) Inventor: **Jones, Gareth Matthew**
**2 Powys Road**
**Penarth South Glamorgan Wales(GB)**
Inventor: **Mends-Rees, Jeffrey David**
**Biesmuiterlaan 14**
**Overijse(BE)**

(74) Representative: **Bullows, Michael et al**
**Dow Corning Limited Cardiff Road**
**Barry South Glamorgan CF6 7YL Wales(GB)**

(54) **Method of providing a foamed mass in a cavity.**

(57) The specification describes a method for providing a foamed mass in a cavity in which a diaphragm is inserted in the cavity to provide a support surface, and a foamable composition is introduced to the cavity above the support. The diaphragm is suitably an expansible e.g. inflated member and the foamable composition is suitably a liquid room temperature vulcanisable silicone foam forming composition. The method is described as of use in filling sections of motor vehicle bodies with foam e.g. for sound deadening purposes.

EP 0 287 230 A2

## METHOD OF PROVIDING A FOAMED MASS IN A CAVITY

This invention is concerned with a method of providing a foamed mass in a cavity.

In the manufacture of products including a hallow section, for example of metal, it is sometimes desired to include within the hollow section a material intended to contribute sound deadening, flame retardant or other properties. The shape, size and disposition of those cavities within the hollow section into which the material is to be placed may render the use of blocks e.g. of preformed foam inappropriate. In those cases where it is desired to fill a cavity having a complex shape or one of non-uniform cross section, for example in a vehicle body on a production line basis, it is likely to be appropriate to introduce to the cavity a liquid material which flows to the desired shape and then hardens or cures to provide a suitable filling. In those cases where light weight or sound deadening properties are desired, it is appropriate to employ a material which also foams when introduced to the cavity.

Liquid, foam forming, curable compositions are available which flow and foam readily at room or slightly elevated temperature to provide a cured product which is light in weight, and has sound absorbing and may also have heat resistant and flame retardant properties. Known silicone based compositions generally require several minutes to cure at ambient temperature to a self-supporting condition. When these compositions are used within hollow metal sections and in contact therewith, the cure may be inhibited due, for example, to the influence of materials present within the section upon catalysts used in the composition and so the cure within hollow metal sections may require a significant period of time. Attempts to use such compositions for filling hollow sections which have significant openings at their lower ends are thus frustrated by flow of composition from the opening before the composition becomes sufficiently cured to be self-supporting. Whilst it has been possible to dam the flow in some cases, this is not always conveniently achieved.

We have now found that a cavity in a hollow section may be filled with a curable composition by a method in which a diaphragm is inserted in the section and expanded into conformity with walls of the section to provide a lower surface in the cavity, the composition is filled into the cavity above the diaphragm and cured.

The present invention provides in one of its aspects a method of providing a foamed mass within a cavity in a hollow section in which method a diaphragm is inserted in the section and caused to extend into conformity with walls of the section and to provide a support surface which defines a lower extremity of the cavity and a curable, foam-forming composition is introduced to the cavity where its foams and cures.

In a method according to the invention the diaphragm serves to provide a support surface in the section, which defines the lower extremity of the cavity. It limits downward flow of the composition in the cavity as the conversion of the composition to its cured condition proceeds. Sufficient foam forming composition is used that, as curing proceeds and the foam rises in the cavity, the curing polymer spreads to conform to the shape of the cavity and preferably so that when cured, the foamed mass blocks the section.

The diaphragm is preferably provided by one or more expansible members each in the form of a bag of expansible material and is preferably constructed, arranged and adapted to be inflated by means of fluid under pressure, for example air, nitrogen or oil. The bag or bags may be left in the hollow section after curing of the composition or may be removed therefrom at an appropriate time. Each bag may be associated with apparatus by means of which the bag may be introduced to a series of hollow sections seriatim. Thus, the bag may be introduced to a hollow section through an aperture formed in the wall thereof, inflated and maintained in inflated condition in the hollow section for a period of time sufficient to permit introduction of the composition to the cavity above the diaphragm, foaming of the composition and curing of the composition to an acceptable extent, deflated and removed from the hollow section and then introduced to the next hollow section and the procedure repeated. The bag is of a material which is able to conform to the shape of the walls of the section, e.g. a material which is able to be deformed when the walls of the inflated bag are urged against the walls of the section and which, when the bag is inflated, is sufficiently cohesive to support the composition when liquid and as it foams and spreads into conformity with the cavity wall and presses there against. The bag is preferably formed from elastomeric material, and is preferably wear resistant under production line conditions. Suitable materials are, for example, butyl rubber and silicone rubber.

A method according to the invention may be used to fill or partially fill hollow sections of various sizes and dispositions for example in vehicle bodies and is principally intended for use in the filling or blocking of hollow sections of vehicles for sound deadening purposes and for restriction of ingress of unwanted materials during use of the vehicle. When using a method according to the invention to block a cavity in a

widthwise extending hollow section two or more diaphragms may be used to restrict outward flow of the composition whilst permitting heightwise expansion of the foaming composition. When using a method according to the invention to block a cavity in a heightwise extending hollow section one or more bags may be employed in side by side relation to provide together said lower extremity of the cavity to restrict downward flow of the composition whilst permitting widthwise and heightwise expansion of the foaming mass into conformity with the interior of the cavity.

In a method according to the present invention, a liquid, foam forming, curable composition is used. The composition chosen is one which is curable at ambient temperature, i.e. the temperature in the hollow section at the time of installation, which may be in the range from about 15°C to about 30°C for example or slightly elevated temperature. Materials which require substantial application of heat in order to effect cure in an acceptable period of time impose additional limitations on various aspects of the method, including the choice of a suitably heat resistant material for the diaphragm. However, heating of the composition to moderately elevated temperatures, for example of the order of 50°C, is generally acceptable under production line conditions. Such a degree of heating may be achieved, for example by heating the composition or a significant part thereof prior to introducing it to the cavity, or the use of a hot fluid to inflate the diaphragm.

Room temperature curable compositions which foam by virtue of production of gases during curing are particularly preferred. Curable silicone compositions are preferred, especially those which comprise a polysiloxane having alkylhydrogen siloxane units and a hydroxylated material so that the composition is curable to form a polysiloxane matrix which is foamed by evolution of hydrogen gas in presence of a suitable catalyst according to the scheme

$$\equiv SiH + HOQ \rightarrow \equiv SiOQ + H_2$$

as is known in the art. For example, curable, foam forming silicone compositions are disclosed in G.B. Patent Specifications 798 669, 867 619 and 1 522 637. Hydrogen gas generated during the reaction causes foaming and expansion of the composition as it cures, resulting in an outward pressure from the composition exerted upon the walls of the cavity and the diaphragm. Various catalysts may be used in a composition employed in a method according to the invention. For example a tin salt of a carboxylic acid as referred to in G.B. Patent Specification 798 669 or a platinum catalyst as referred to in G.B. Patent Specification 1 522 637. Suitable tin salts include tin salts of carboxylic acids and particularly the stannous salts of the more commonly available carboxylic acids. Examples of suitable materials are dibutyl tin dilaurate, stannous acetate, stannous napthenate, stannous benzoate, stannous sebacate, stannous succinate and stannous octoate. Platinum catalysts may take any of the known forms, ranging from platinum as deposited on carriers such as silica gel or powdered charcoal, to platinic chloride, salts of platinum and chloroplatinic acids. A preferred form of platinum is chloroplatinic acid either as the commonly obtainable hexahydrate or the anhydrous form, on account of its easy dispersibility in organosilicon systems and its non-effect on colour of the mixture. Platinum complexes may also be used e.g. those prepared from chloroplatinic acid hexahydrate and divinyl tetramethyldisiloxane.

The hydroxylated material (HOQ) may be an organic material or a silicon compound and preferably comprises two or more hydroxyl groups per molecule in order to provide a suitable elastomeric foam mass. Preferably the hydroxylated material comprises a polysiloxane having silicon-bonded hydroxyl groups. If desired one may also include in the composition a polysiloxane having alkenyl e.g. vinyl groups, which is particularly appropriate if a platinum catalyst is employed for the addition reaction between the alkylhydrogensiloxane and alkenyl groups, e.g. due to flame retardant properties conferred by the platinum compound.

Suitable polysiloxanes having alkylhydrogensiloxane units include polymers having units according to the general formula

$$R_pHSiO_{\left(\frac{3-p}{2}\right)}$$

in which each R represents a lower alkyl or phenyl group e.g. a methyl group, and $\underline{p}$ is 1 or 2. The alkylhydrogen polysiloxanes may also comprise units

$$R_nSiO_{\frac{(4-n)}{2}}$$

in which R is as referred to above and n is 1, 2 or 3. Curing reactions of the preferred compositions are dependant on presence of appropriate proportions of the interactive substituents and the alkylhydrogen polysiloxane may be selected accordingly. We prefer that each R represents a methyl group. Preferably terminal groups of the alkylhydrogen polysiloxane have the formula

$R_3SiO_{\frac{1}{2}}$

where each R represents a methyl group. Suitable alkylhydrogen polysiloxanes include those comprising MeHSiO units with or without the presence of $Me_2SiO$ units and having viscosities of the order of from about $10^{-6}$ to about $10^{-4}$ $m^2/s$ more preferably from about $10^{-6}$ to about $5 \times 10^{-5}$ $m^2/s$.

Suitable polysiloxanes having silicon-bonded hydroxyl or alkenyl groups include polymers which include units according to the general formula

$$R_m(Q)SiO_{\frac{(3-m)}{2}}$$

in which each Q represents an OH group or an alkenyl group having 2 to 4 carbon atoms inclusive, for example a $-CH=CH_2$ or a $-CH_2-CH=CH_2$ group, each R represents a lower alkyl or phenyl radical e.g. a methyl radical and m is 1 or 2. These polysiloxanes also comprise units

$$R_nSiO_{\frac{(4-n)}{2}}$$

in which R and n are as referred to above. These materials are preferably liquids and are chosen so that their functionality is appropriate in relation to the degree of chain extension and crosslinking required during curing of the composition. The polysiloxanes having silicon-bonded hydroxyl groups are preferably silanol terminated polydiorganosiloxanes according to the general formula

$HO((R_2)SiO)_sH$

in which each R represents a methyl group and s has a value such that the polysiloxane has a viscosity of about $5 \times 10^{-4}$ to $2.5 \times 10^{-2}$ $m^2/s$ i.e. a number average molecular weight of the order of about 20,000 to about 80,000. Preferred materials have viscosities of the order of about $1.5 \times 10^{-3}$ to about $1.5 \times 10^{-2}$ $m^2/s$ and comprise, per molecule, primarily units according to the general formula $R_2SiO$ and two units according to the general formula

$R_2(OH)SiO_{\frac{1}{2}}$.

Preferred polysiloxanes having silicon-bonded alkenyl groups include those in which the alkenyl groups provide less than about 5% of the total silicon-bonded organic groups of the polymer. The alkenyl groups may be attached to terminal silicon atoms of the polysiloxane chain or to silicon atoms along the chain or both. Suitable alkenyl polysiloxanes include dimethylvinyl end blocked polysiloxanes for example those having viscosities up to about $8.5 \times 10^{-2}$ $m^2/s$ and phenylmethylvinyl end-blocked polydimethylsiloxanes for example those having viscosities of about $2.5 \times 10^{-4}$ to about $10^{-2}$ $m^2/s$. In the preferred materials, each R represents a methyl radical. In preferred compositions according to the invention, the preferred hydroxy and alkenyl functional polysiloxanes thus provide polysiloxane chains of significant length and this is desirable in view of flexibility and elastomeric properties required of the product resulting from curing of the composition. If desired, comparatively low molecular weight, i.e. short chained, organodifunctional polysiloxanes may also be included in the composition. Suitable materials include $\alpha,\omega$ dihydroxy polydimethylsiloxanes having up to twenty five dimethylsiloxane units in the molecular chain.

One may also include in the composition appropriate quantities of higher functional materials as crosslinking agents. Suitable crosslinking agents include materials having three or more functional e.g.

hydroxy groups per molecule. Preferred crosslinking agents include an alkoxysilane and/or a condensation product thereof capable of combining with three or more hydroxy polysiloxane molecules with release of the corresponding alcohol of the alkyl radicals, e.g. methyl trimethoxysilane, n-propylorthosilicate and ethyl polysilicate.

Compositions for use in the invention preferably include monofunctional hydroxy organic or silicon compounds effective as chain terminators. Such materials influence the structure of foams formed by use of the composition and their use is highly preferred where predominantly open celled foams are desired. Suitable monofunctional hydroxy compounds include triorganosilanols and organosiloxanols which may be for example short chain siloxanes having for example up to about 25 siloxane units per molecule and having a terminal or pendant hydroxyl group, or a material of the general formula $R_3SiOH$ where each R may be for example a lower alkyl group e.g. a methyl group or a phenyl group. Examples of such materials include

$HO(CH_3)_2Si(OSi(CH_3)_2)_3CH_3$ (nonamethyltetrasiloxan-1-ol)

$$\begin{array}{c} CH3 \\ | \\ (CH_3)_3Si\text{-}O\text{-}Si\text{-}O\text{-}Si(CH_3)_3 \\ | \\ OH \end{array}$$

(heptamethyltrisiloxan-2-ol) and

$CH_3(C_6H_5)_2SiOH$ (diphenylmethylsilanol).

Preferably fillers are incorporated in compositions used in the invention. Any desired filler may be employed for example metal oxides, clays, fume silicas, hydrophobic silicas e.g. those prepared by treatment of finely divided silica with organochlorosilanes, organosiloxanes, organosilazanes or alkylsilanols and powdered glass.

Other ingredients may be included in the composition for example extenders, surfactants and pore size regulating agents, for example fluorine containing polysiloxanes.

Advantages which flow from use of the invention stem primarily from the control of flow of the composition as it cures to a self supporting condition. Thus one may, for example, apply a prescribed quantity of composition to a heightwise extending hollow section without substantial wastage of composition flowing from the section before it cures and one may achieve repetitive uniform filling of cavities in hollow sections with minimal operator attention after introduction of the diaphragm and the liquid composition to the cavity. A method according to the invention may be employed for the partial or complete filling of cavities in hollow sections, particularly hollow sections of vehicle bodies and is particularly of value in the sound deadening of cars and vans which have substantial lengths of open-ended tubular sections. It is of value primarily in those situations where it is important to minimise wastage of material from heightwise extending hollow sections or to ensure satisfactory results without prolonged attention by operatives. Thus it is envisaged as of particular value in the manufacture of vehicles on a production line basis, for example in the treatment of door pillars, "A posts" and the like.

The invention provides in another of its aspects a method of treating a motor vehicle body having a hollow section comprising the steps of providing in the body an aperture communicating with the hollow section, inserting through the aperture and into the hollow section an expansible member, inflating the member to cause it to conform to the shape of the interior of the hollow section and to provide a support surface which extends across the hollow section, introducing to the section above the support surface a silicone composition curable to provide a foamed mass, curing the composition, deflating the member and removing the member from the hollow section.

In order that the invention may become more clear, there now follows a description of an example method according to the invention and illustrative thereof.

In the example method a liquid, foam forming, curable composition based on silicone materials was used. The composition was a room temperature curable silicone composition formed by mixing about seven parts by weight of a catalyst (stannous octoate) with 100 parts by weight of a component comprising

| Material | Parts by weight |
|---|---|
| α,ω, hydroxypolydimethylsiloxane MW about 21,000 (viscosity about 2 x $10^{-3}$ m²/s) | 100 |
| α,ω, hydroxypolydimethylsiloxane MW about 900 (viscosity about 4.2 x $10^{-5}$ m²/s) | 10 |
| Diphenylmethylsilanol | 10 |
| Trimethylsiloxy endblocked methylhydrogensiloxane, (viscosity about 3 x $10^{-5}$ m²/s) | 10 |
| Finely divided filler | 25 |
| n-propylorthosilicate | 4 |

When mixed and allowed to foam freely, the composition foamed and cured at room temperature to provide a low density (about 120 to 200 kg/m³) foam having for example good sound insulation properties.

An aperture was formed near one end of a rectangular section (47mm x 70mm) Perspex tube. The tube was placed upright, with the length of the tube 30 extending heightwise and the aperture at it's lower end. An inflatable diaphragm in the form of a toy balloon was inserted through the aperture into the hollow interior of the tube. The balloon was inflated with air under pressure to an extent sufficient to cause the balloon to expand into conformity with the shape of the interior of the hollow section. An upper surface of the inflated balloon provided a support surface at the lower end of the cavity in the tube which surface extended across the hollow section. A charge formed by mixing 100g of the component with 7g of the catalyst was poured into the hollow section above the support surface and allowed to foam freely and cure at room temperature (about 22°C). As the composition cured, the composition foamed and increased in viscosity and expanded within the tube. As the foam rose in the tube it was urged into conformity with the shape of the interior of the tube. After a delay of 5 minutes after charging the composition to the hollow section, the balloon was deflated and removed from the hollow section. The balloon peeled readily from the foam without disturbing the disposition of the foam. It was observed that none of the silicone foam had penetrated the hollow section below the balloon. When the foamed composition had become fully cured the whole cross section of the Perspex tube had become completely blocked by the foam and it was not possible to remove the foam from the tube without tearing the foam.

## Claims

1. A method of providing a foamed mass within a cavity in a hollow section in which method a diaphragm is inserted in the section and caused to extend into conformity with walls of the section and to provide a support surface which defines a lower extremity of the cavity and a curable, foam-forming composition is introduced to the cavity where it foams and cures.

2. A method according to Claim 1 wherein the diaphragm is provided by an expansible member.

3. A method according to Claim 2 wherein the member is adapted and arranged to be inflated by means of fluid under pressure whereby to cause it to extend into conformity with the walls of the section and to provide said support surface.

4. A method according to any one of the preceding claims wherein the diaphragm is introduced into the section through an aperture in the wall of the section.

5. A method according to any one of the preceding claims wherein the composition is heated to accelerate curing thereof.

6. A method of treating a motor vehicle body having a hollow section comprising the steps of providing in the body an aperture communicating with the hollow section, inserting through the aperture and into the hollow section an expansible member, inflating the member to cause it to conform to the shape of the interior of the hollow section and to provide a support surface which extends across the hollow section, introducing to the section above the support surface a silicone composition curable to provide a foamed mass, curing the composition, deflating the member and removing the member from the hollow section.

7. A method according to any one of the preceding claims wherein the composition comprises a liquid room temperature vulcanisable silicone foam composition.

8. A method according to Claim 7 wherein the liquid room temperature vulcanisable silicone foam forming composition comprises a polysiloxane having alkylhydrogen siloxane units, a polysiloxane having silicon-bonded hydroxyl groups and a catalyst.

9. A method according to Claim 8 wherein the composition also comprises a polysiloxane having alkenyl groups.

10. A hollow section containing a foamed mass produced by a method according to any one of the preceding claims.

11. A method according to Claim 1 substantially as hereinbefore described with reference to the Example.